# EUROPEAN PATENT SPECIFICATION

(11) **EP 0 875 148 B1**
(45) Date of publication and mention of the grant of the patent: **10.04.2002**
(21) Application number: 98303386.1
(22) Date of filing: 30.04.1998
(51) Int. Cl.: A21C 3/06

(54) **Rolling up a sheet of dough**
Aufrollen eines Teigblattes
Enrouler une feuille de pâte

(30) Priority: 30.04.1997 JP 12794497
(43) Date of publication of application: 04.11.1998
(73) Proprietor: Rheon Automatic Machinery Co., Ltd., Utsunomiya-shi, Tochigi-shi (JP)
(72) Inventor: Ueno, Sadao, Utsunomiya-shi, Tochigi-ken (JP)
(74) Representative: Leale, Robin George

(56) References cited:
- EP-A- 0 204 490
- EP-A- 0 360 498
- DE-A- 2 709 544
- GB-A- 2 075 906

## Description

This invention relates to a method and apparatus for rolling up a sheet of dough when processing bread, confectionery, and the like. More particularly it relates to a method and apparatus for rolling up a piece of a dough sheet, for example when making croissants, or a piece of a dough sheet on which fillings such as sausages, pieces of cheese, pieces of chocolate, creamy materials, jam, and the like have been placed.

There are many examples in the prior art of apparatus for rolling up a sheet of dough. For example, one such prior art apparatus is provided with a conveyor belt above which a plate or a belt is positioned so that a gap is defined between them. When a sheet of dough is passed through the gap, it is rolled up. A similar apparatus using a roller is shown in DE 2709544.

GB 2075906 discloses an apparatus for rolling a sheet of sponge cake material into a roll. The sheet is carried on a plurality of conveyor belts, and is rolled up through contact with a number of individual rollers mounted on a common shaft. The conveyor belts deflect downwardly to accommodate the roll as its diameter increases.

In use of such an apparatus, when a substantially triangular sheet of dough for forming a croissant is to be rolled up, it is located on the conveyor with its base side facing in the downstream direction and intersecting the feeding direction of the conveyor at right angles. Then, the apparatus starts rolling up the sheet from its base side. However, the sheet may not be properly rolled up, due to its various characteristics. Thus the sheet may be loosely rolled up, or it may not be rolled up at all but may be deformed when it passes by a rolling up roller, or it may be unevenly rolled up across its width.

A device has been proposed for preventing such a dough sheet from being loosely rolled up, as disclosed in Japanese Patents Laid-open Nos. 61-271939 and 63-22132. Another device has been proposed for preventing just a part of a sheet from being loosely rolled up, as disclosed in Japanese Patent Laid-open No. 62-61533. However, these devices do not make a tight core when they start rolling up a sheet of dough. Thus they cannot firmly roll up the dough sheet, so that they still do not overcome the problems of the prior art apparatus.

Also, no apparatus has yet been made to successfully roll up a sheet of dough on which solid pieces have been placed.

Also, in apparatus of the prior art, some elements have to be adjusted or replaced according to the thickness of the sheet of dough and/or the diameter of a roll, which makes the apparatus more expensive.

Viewed from one aspect the present invention provides method of rolling up a sheet of dough, comprising feeding the sheet on a conveyor, rotating a rolling up roller in the opposite direction to the feeding direction of the conveyor, the rolling up roller being positioned above the conveyor and comprised of a plurality of elemental rollers arranged along an axis of the rolling up roller, each elemental roller being separately movable up and down, feeding the sheet on the conveyor to the rolling up roller, starting rolling up the sheet with at least one of the elemental rollers of the rolling up roller by kicking up the leading end of the sheet, and continuing to roll up the sheet by means of the rotation of the rolling up roller and the movement of the conveyor, each of the elemental rollers moving up and down according to the thickness of the sheet being rolled up.

Viewed from another aspect the invention provides apparatus for rolling up a sheet of dough, comprising a conveyor for feeding the dough sheet, and a rolling up roller, the rolling up roller being positioned above the conveyor and arranged to rotate in the opposite direction to the feeding direction of the conveyor, and being comprised of a plurality of elemental rollers arranged along an axis of the rolling up roller, each roller being separately movable up and down.

The apparatus may further comprise driving means arranged to rotate and support the rolling up roller in such manner that each elemental roller of the said rolling up roller can move up and down.

The said driving means may include an internal gear formed on the inner surface of the rolling up roller, a pinion gear that is made to mesh with the internal gear, and a positioning roller arranged to urge the rolling up roller to a position where its axis is downstream of that of the said pinion gear.

Preferably the said positioning roller is located upstream of the rolling up roller and is arranged to contact the surface of the sheet.

The said rolling up roller may be mounted between two rollers.

The said rolling up roller may be arranged to swing around a point that is above its axis, so that it can move up and down.

Two embodiments of the invention will now be described by way of example and with reference to the accompanying drawings, in which:-
Fig. 1 is a perspective view of a first embodiment;
Fig. 2 is a side view of a first embodiment of a rolling up roller;
Fig. 3 is another side view of the rolling up roller, to a larger scale;
Figs. 4 and 5 are side views of a second embodiment of a rolling up roller;
Figs. 6a-6d are views to illustrate the function of the roller of the second embodiment; and

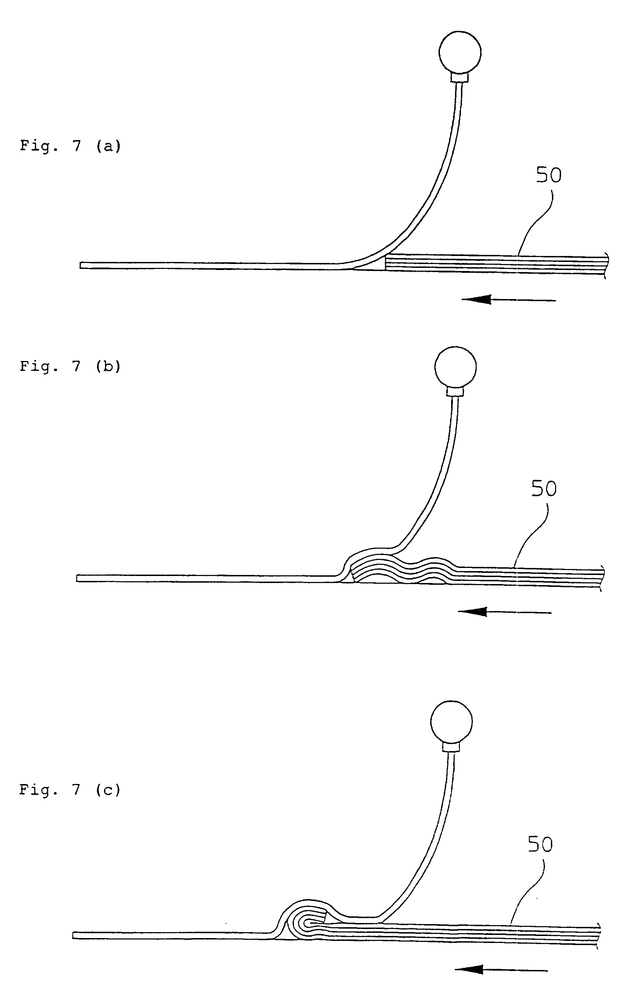

Figs. 7a, 7b and 7c show a prior art apparatus.

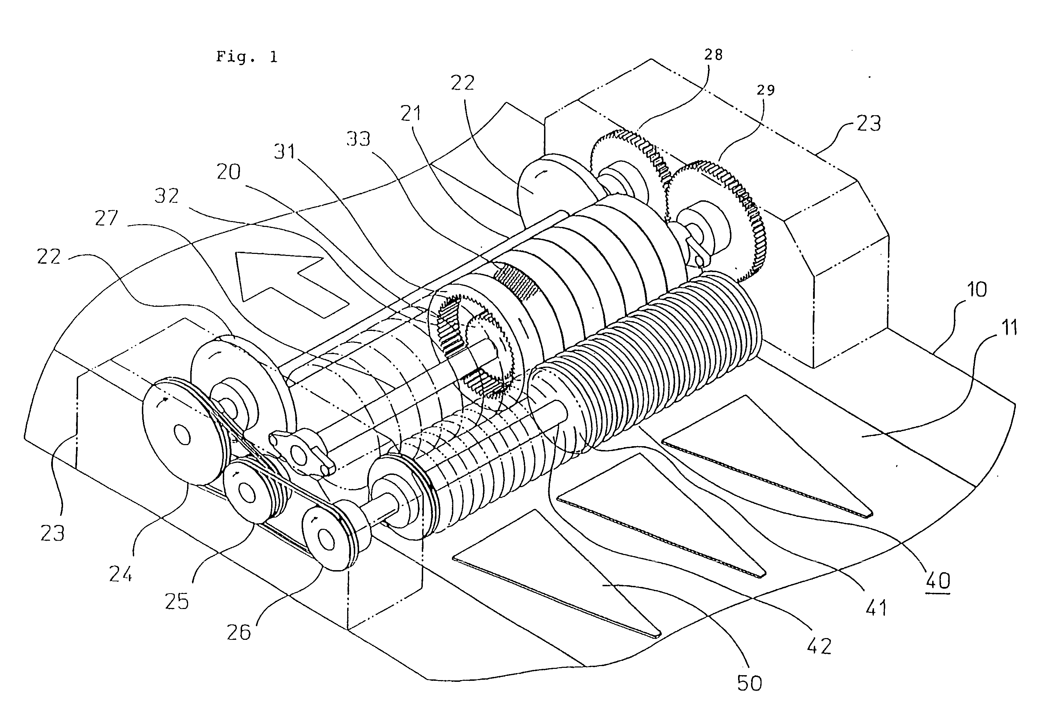

As seen in Fig. 1, a rolling up apparatus according to this invention includes a feeding means 10 in the form of a conveyor belt 11 on which triangular pieces 50 of dough (which are to be made into croissants in this embodiment) are conveyed. When being so conveyed, the base side of each triangular piece 50 faces in the downstream direction of the conveyor belt 11, i.e. the direction shown by the arrow in this figure. A rolling up roller 31 rolls up the dough pieces 50, as it rotates.

In more detail, a driving shaft 21 is located horizontally above and across the conveyor belt 11. Frames 23 rotatably and freely support the opposite ends of the driving shaft. The shaft extends through, and is secured to, disks 22 one near to each of its opposite ends. The disks 22 contact the conveyor belt 11 and thus, as the conveyor belt moves, the disks 22 are rotated and thereby the driving shaft 21 is rotated.

Another driving shaft 27 extends above and across the conveyor belt 11 at a position upstream from the driving shaft 21. The driving shaft 27, which rotates the rolling up roller 31, is driven by the driving shaft 21 through meshing gears 28 and 29 fixed to the ends of the shafts 21 and 27 respectively. A plurality of pinion gears 20 of relatively small thickness are fixed on the driving shaft 27. In an alternative embodiment a single, much thicker pinion gear could be fixed on the shaft.

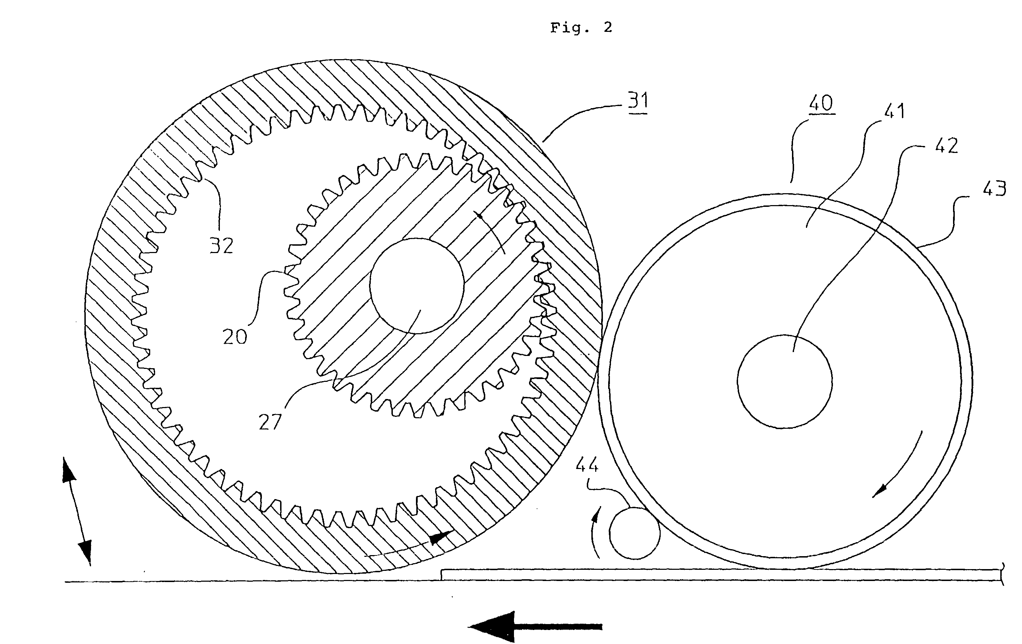

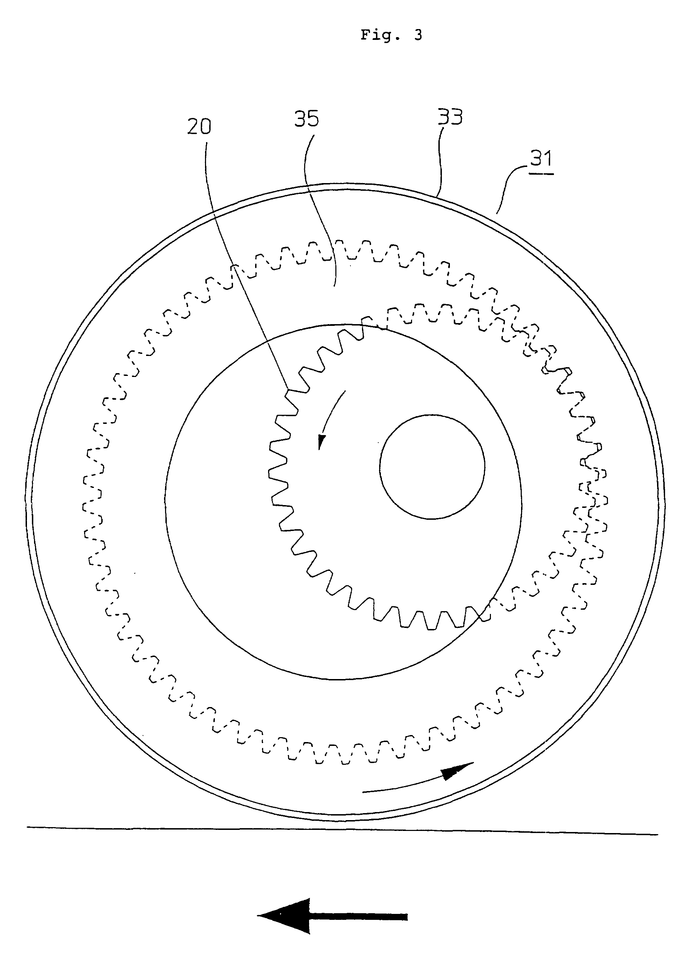

The rolling up roller 31 is divided into a plurality of elemental rollers each of which has an internal gear 32, as shown in Fig. 2, which meshes with a respective pinion gear 20. Instead of the meshing of the internal gears 32 and the pinion gears 20, frictional wheels may be used. Flanges 35 (Fig. 3) may be formed on opposite ends of the roller 31 or each elemental roller, to prevent the internal gears 32 on the rollers 31 from sliding on the pinion gears 20 and disengaging from them. The outer surface of the rolling up roller 31 is covered by belts 33, made of rubber.

An additional roller 40 is located upstream of the roller 31 and parallel to the same. The roller 40 pushes against the rolling up roller so that the axis of the latter is shifted to a position downstream of the axis of the pinion gear 20, which lies within the cavity of the rolling up roller. Thus, each elemental roller of the rolling up roller 31 can be generally swung around the point where the associated pinion gear 20 meshes with its internal gear 32. A nominal gap is maintained between the rolling up roller 31 and the conveyor belt 11, which can be adjusted according to the thickness of the dough sheet.

The roller 40 comprises a plurality of disks 41 fixed on a shaft 42. Round belts 43 extend around the circumferential surfaces of the disks 41. A gap is maintained between the belts 43 and the conveyor belt 11, so that the dough pieces 50 can pass therethrough. The gap can be adjusted according to the thickness of the dough sheet.

A bar 44 of small diameter is located parallel to the roller 40 and downstream thereof, as shown in Fig. 2. The roller 40 and the bar 44 are rotated by the driving shaft 21 through pulleys 24, 25 and 26. The bar 44 acts to remove a dough piece 50 from the surface of the roller 40 if the dough piece adheres thereto.

In operation, when the conveyor belt 11 starts to feed the dough pieces 50, the disks 22 are rotated by the conveyor belt. As a result the shaft 27 is rotated through the gears 28 and 29. Such rotation of the shaft 27 and the pinion gear 20 causes the rolling up roller 31 to be rotated in the direction opposite to the feeding direction of the conveyor belt 11. Also, by way of the pulleys 24,25, and 26, the roller 40 is rotated in the opposite direction to the roller 31.

As the conveyor 11 operates, a dough piece 50 enters the gap between the disks 41 of the roller 40 and the conveyor. As the dough piece 50 passes through the gap, it is fed by the round belts 43. If it adheres to the belts 43 the bar 44 removes it.

When the base side of the dough piece 50 contacts the rolling up roller 31, the belt 33 on the roll-up roller 31 kicks up the edge of the dough piece. The dough piece is thereby bent so that a firm core is formed, whereby to make a firmly rolled up piece. Because the belt 33 is made of rubber friction is enhanced between it and the dough piece 50, and the belt positively grips the edge of the dough piece.

As the conveyor belt 11 continues to feed the dough piece 50, the rolling up roller 31 rolls it up progressively. As the diameter of the dough piece thereby increases, the rolling up roller 31 is gradually swung by the rolled up dough piece around the point where the pinion gear 20 meshes with the internal gear 32. As a result, the roller 31 is lifted, and the gap between it and the conveyor 11 increases. The feeding rate of the conveyor belt 11 is higher than the speed of the external surface of the roller 31 when it rotates. Consequently the dough piece continues to advance along the conveyor belt 11 and passes through the gap between the rolling up roller 31 and the conveyor belt. As it passes through the gap, the roller 31 suitably presses it.

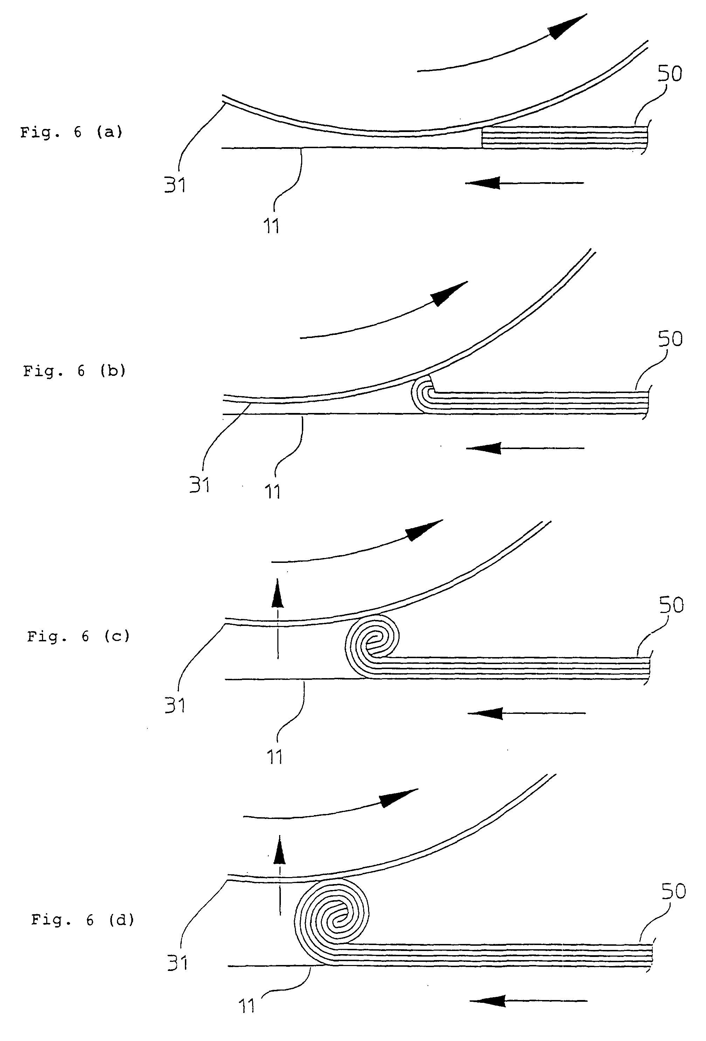

In more detail, Figs. 6a-6d show the dough piece 50 being rolled up as it is fed in the downstream direction. As seen in Fig. 6a, the rolling up roller 31 first contacts the base edge of the dough piece, so that the edge is kicked up by the surface of the roller. Then, as shown in Fig. 6b, the roller 31 can easily grip and bend the edge. The roller 31 presses the downstream side of the dough piece 50 as it rolls it up. As seen in Figs. 6c and 6d, as the diameter of the rolled up dough piece increases, the gap between the roller 31 and the conveyor belt 11 increases. Also, as the diameter increases, the angle at which the outer surface of the rolling up roller contacts the dough piece decreases.

When the dough piece is substantially fully rolled up, the roller 31 contacts the dough piece 50 from above, so that the roller 31 presses the upstream side of the dough piece 50. Thus the pressing force from the rolling up roller 31 acts over the entire surface of the dough piece in the process of rolling it up. The prior art apparatus which uses a horizontal plate to roll up a dough piece cannot act in this way.

When the rolling up roller 31 starts rolling up the dough piece as shown in Fig. 6a, the round belts 43 hold the dough piece on the conveyor belt 11. Consequently the roller 31 is able to stably grip the dough piece as it starts to roll it up, and is thereby prevented from rolling up the dough piece unevenly.

As explained above with reference to Fig. 1, the rolling up roller 31 is made up of a plurality of elemental rollers, along its axis. As previously mentioned, each such elemental roller can separately be swung around the position where the pinion gear 20 meshes with the internal gear 32. If, as in this embodiment, the dough piece 50 is rolled up to make a somewhat spindle-shaped product, such as a croissant, the diameter of the product is not constant along its length. However, when such a dough piece passes through the gaps between the elemental rollers and the conveyor belt 11, the elemental rollers can move up separately according to the differing diameter of the product. As a result, each of the elemental rollers can properly press a respective part of the product, even though the diameter of the rolled up dough piece is not constant.

Also, as described above, the rolling up roller 31 holds the dough piece 50 so as to grip it sufficiently as it is rolled up and conveyed by the conveyor belt 11. Thus, even if solid filings, such as sausages, pieces of cheese, pieces of chocolate and the like, are placed on the dough piece 50, it can still be firmly rolled up by the roller 31.

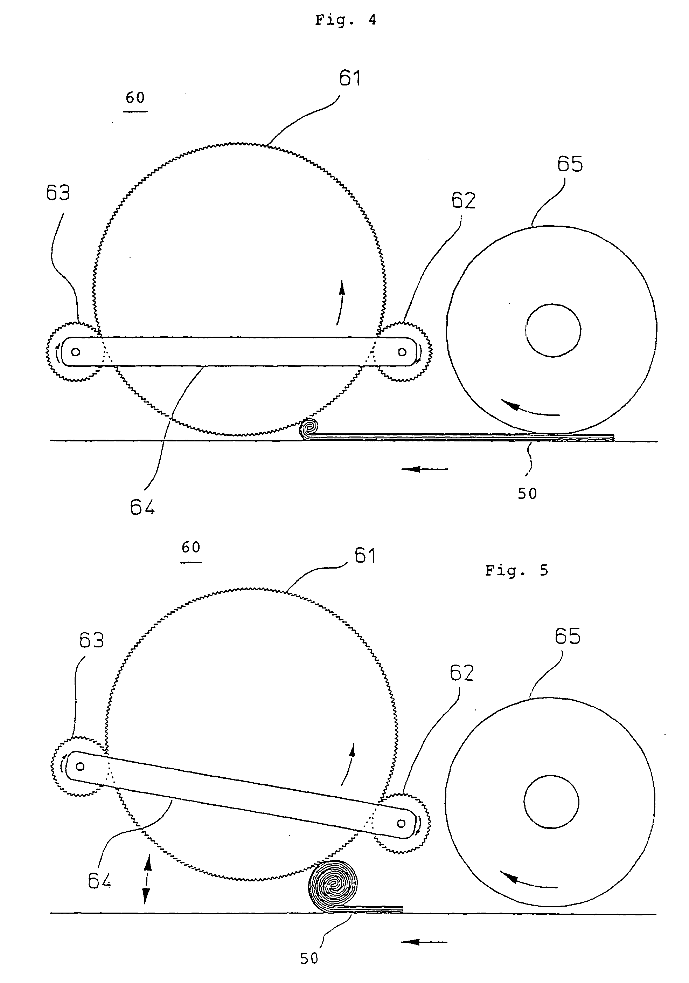

Figs. 4 and 5 show apparatus 60 according to another embodiment of this invention. A rolling up roller 61 is held between a roller 62 and a driven roller 63, connected a link bar 64. The roller 62 is located upstream of the driven roller 63 and is directly connected to a drive motor (not shown). The driven roller 63 and the link bar 64 can be swung relative to the roller 62, which also causes the roller 61 to be swung around the roller 62. The rollers 61,62, and 63 are formed with meshing gears at their adjacent ends. A roller 65 is located to press down on the dough piece 50 as it is fed, so that the roller 61 firmly rolls it up.

As a dough piece 50 is rolled up, its thickness increases. As the thickness increases, the rollers 61 and 63 are lifted by the dough piece, while at the same time it is fed in the downstream direction. Thus the apparatus 60 generates an effect that is similar to that of the first embodiment.

## Claims

1. A method of rolling up a sheet of dough (50), comprising feeding the sheet on a conveyor (11), rotating a rolling up roller (31, 61) in the opposite direction to the feeding direction of the conveyor, the rolling up roller being positioned above the conveyor and comprised of a plurality of elemental rollers arranged along an axis of the rolling up roller, each elemental roller being separately movable up and down, feeding the sheet on the conveyor to the rolling up roller, starting rolling up the sheet with at least one of the elemental rollers of the rolling up roller by kicking up the leading end of the sheet, and continuing to roll up the sheet by means of the rotation of the rolling up roller and the movement of the conveyor, each of the elemental rollers moving up and down according to the thickness of the sheet being rolled up.

2. Apparatus for rolling up a sheet of dough (50), comprising a conveyor (11) for feeding the dough sheet, and a rolling up roller (31, 61), the rolling up roller being positioned above the conveyor and arranged to rotate in the opposite direction to the feeding direction of the conveyor, and being comprised of a plurality of elemental rollers arranged along an axis of the rolling up roller, each roller being separately movable up and down.

3. Apparatus as claimed in claim 2, further comprising driving means (20) arranged to rotate and support the rolling up roller in such manner that each elemental roller of the said rolling up roller can move up and down.

4. Apparatus as claimed in claim 3, wherein the said driving means includes an internal gear (32) formed on the inner surface of the rolling up roller (31), a pinion gear (20) that meshes with the internal gear, and a positioning roller (40) arranged to urge the rolling up roller to a position where its axis is downstream of that of the said pinion gear.

5. Apparatus as claimed in claim 4, wherein the said positioning roller (40) is located upstream of the rolling up roller (31), and is arranged to contact the surface of the dough sheet.

6. Apparatus as claimed in claim 2, wherein the said rolling up roller (61) is mounted between two rollers (62,63).

7. Apparatus as claimed in any of claims 2 to 6, wherein the rolling up roller (31, 61) is arranged to swing around a point that is above its axis, so that it can move up and down.

## Patentansprüche

1. Verfahren zum Aufrollen einer Teigplatte (15), umfassend das Zuführen der Platte auf einem Förderer (11), des Drehen einer Aufrollrolle (31, 61) entgegengesetzt zur Förderrichtung des Förderers, wobei die Aufrollrolle oberhalb des Förderers angeordnet ist und aus einer Mehrzahl von Rollenelementen besteht, die längs einer Achse der Aufrollrolle angeordnet sind, und jedes Rollenelement gesondert auf und ab beweglich ist, Zuführung der Platte auf dem Förderer zur Aufrollrolle, Beginnen des Aufrollens der Platte mit zumindest einem der Rollenelemente der Aufrollrolle durch Hochstoßen des Führungsendes der Platte, und Fortfahren des Aufrollens der Platte mittels der Rotation der Aufrollrolle und der Bewegung des Förderers, wobei sich jedes Rollenelement entsprechend der Dicke der sich aufrollenden Platte auf und nieder bewegt.

2. Vorrichtung zum Aufrollen einer Teigplatte (50), bestehend aus einem Förderer (11) für die Zufuhr der Teigplatte und einer Aufrollrolle (31, 61), wobei die Aufrollrolle oberhalb des Förderers positioniert und derart angeordnet ist, daß sie sich in entgegengesetzter Richtung zur Förderrichtung des Förderers dreht, wobei sie aus einer Mehrzahl von Rollenelementen zusammengesetzt ist, die längs einer Achse der Aufrollrolle angeordnet sind, wobei jede Rolle gesondert auf- und abbewegbar ist.

3. Vorichtung nach Anspruch 2, ferner mit einer Antriebseinrichtung (20), die derart angeordnet ist, daß sie die Aufrollrolle derart dreht und abstützt, daß jedes Rollenelement dieser Aufrollrolle sich auf- und abbewegen kann.

4. Vorrichtung nach Anspruch 3, bei welcher die Antriebseinrichtung ein Innenzahnrad (32) aufweist, das auf der Innenfläche der Aufrollrolle (31) ausgebildet ist, ein Ritzel (20), das mit dem Innenzahnrad kämmt, und eine Positionierrolle (40), die derart angeordnet ist, daß sie die Aufrollrolle in eine Position belastet, in der ihre Achse förderabwärts zu derjenigen des Ritzels angeordnet ist.

5. Vorrichtung nach Anspruch 4, bei welcher die Positionierrolle (40) förderaufwärts von der Aufrollrolle (31) angeordnet und derart angebracht ist, daß sie die Oberfläche der Teigplatte berührt.

6. Vorrichtung nach Anspruch 2, bei welcher die Aufrollrolle (61) zwischen zwei Rollen (62, 63) montiert ist.

7. Vorrichtung nach einem der Ansprüche 2 bis 6, bei welcher die Aufrollrolle (31, 61) derart angeordnet ist, daß sie um einen Punkt schwingen kann, der oberhalb ihrer Achse liegt, derart, daß sie sich auf- und abbewegen kann.

## Revendications

1. Procédé pour enrouler une feuille de pâte (50), comprenant la délivrance de la feuille sur un convoyeur (11), le fait de faire tourner un rouleau d'enroulage (31, 61) dans la direction opposée à la direction de délivrance du convoyeur, le rouleau d'enroulage étant positionné au-dessus du convoyeur et comprenant une pluralité de rouleaux élémentaires disposés le long d'un axe du rouleau d'enroulage, chaque rouleau élémentaire étant mobile séparément vers le haut et vers le bas, de délivrer la feuille sur le convoyeur au rouleau d'enroulage, de démarrer l'enroulage de la feuille avec au moins l'un des rouleaux élémentaires du rouleau d'enroulage en poussant vers le haut l'extrémité avant de la feuille, et de continuer à enrouler la feuille au moyen de la rotation du rouleau d'enroulage et du mouvement du convoyeur, chacun des rouleaux élémentaires se déplaçant vers le haut et vers le bas en fonction de l'épaisseur de la feuille qui est enroulée.

2. Dispositif pour enrouler une feuille de pâte (50), comprenant un convoyeur (11) pour délivrer la feuille de pâte, et un rouleau d'enroulage (31, 61), le rouleau d'enroulage étant positionné au-dessus du convoyeur et agencé de façon à tourner dans la direction opposée à la direction de délivrance du convoyeur, et comprenant une pluralité de rouleaux élémentaires disposés le long d'un axe du rouleau d'enroulage, chaque rouleau étant mobile séparément vers le haut et vers le bas.

3. Dispositif selon la revendication 2, comprenant de plus des moyens d'entraînement (20) agencés pour tourner et pour supporter le rouleau d'enroulage de telle sorte que chaque rouleau élémentaire dudit rouleau d'enroulage puisse se déplacer vers le haut et vers le bas.

4. Dispositif selon la revendication 3, dans lequel lesdits moyens d'entraînement comprennent un engrenage interne (32) formé sur la surface intérieure du rouleau d'enroulage (31), un pignon (20) qui s'engrène avec l'engrenage interne, et un rouleau de positionnement (40) agencé pour pousser le rouleau d'enroulage vers une position dans laquelle son axe est en aval de celui dudit pignon.

5. Dispositif selon la revendication 4, dans lequel ledit rouleau de positionnement (40) est disposé en amont du rouleau d'enroulage (31), et est agencé pour venir en contact avec la surface de la feuille de pâte.

6. Dispositif selon la revendication 2, dans lequel ledit rouleau d'enroulage (61) est monté entre deux rouleaux (62, 63).

7. Dispositif selon l'une quelconque des revendications 2 à 6, dans lequel le rouleau d'enroulage (31, 61) est agencé pour osciller autour d'un point qui se trouve au-dessus de son axe, de telle sorte qu'il puisse se déplacer vers le haut et vers le bas.
